Europäisches Patentamt

(19) European Patent Office

Office européen des brevets

(11) Publication number: **0 000 214**
**B1**

(12) **EUROPEAN PATENT SPECIFICATION**

(21) Application number: **78200033.5**

(22) Date of filing: **09.06.78**

(51) Int. Cl.³: **B 01 J 20/20,**
**C 01 B 31/12//C 02 F 1/28**

(54) Process for the preparation of a solid carbon-containing material having a sorption capacity for metal ions.

(30) Priority: **22.06.77 NL 7706879**

(43) Date of publication of application:
**10.01.79 Bulletin 79/1**

(45) Publication of the grant of the European patent:
**28.01.81 Bulletin 81/4**

(84) Designated Contracting States:
**BE DE FR GB NL**

(56) References cited:
**DE - A - 2 320 886**
**FR - A - 587 359**
**FR - A - 849 046**
**FR - A - 1 089 139**
**FR - A - 2 253 815**
**US - A - 2 829 115**

(73) Proprietor: **Akzo N.V.**
**Ijssellaan 82**
**NL-6826 DW Arnhem (NL)**

(72) Inventor: **De Jong, Geert Jan**
**Oude Deldenerweg 220**
**7548 PN Boekelo (NL)**

(74) Representative: **Sieders, René**
**P.O.Box 314**
**NL-6800 AH Arnhem (NL)**

Courier Press, Leamington Spa, England.

# Process for the preparation of a solid carbon-containing material having a sorption capacity for metal ions

The invention relates to a process for the preparation of a solid carbon-containing material having a sorption capacity for metal ions. The preparation of a solid carbon-containing material having a sorption capacity for metal ions is known in itself. In the Netherlands Patent Application 6 805 305, for instance, a process is described in which polymers of vinyl aromatic hydrocarbons are reacted with a compound made up of sulphur and chlorine in the presence of a catalyst and the resulting polymer sulphides or polymer polysulphides are oxidized or reduced. Reduction results in the formation of thiol resins which have a high affinity for ions of heavy metals. A disadvantage to the known metal adsorbing material is its high price. This is due both to the high price of the starting materials and the relatively complex process to be used for the preparation of the desired thiol resins.

Particularly, when a material is considered which does not qualify for regeneration once it is spent, the known process must be regarded as costly.

Surprisingly, it has now been found that a solid carbon-containing material having a sorption capacity for metal ions can be obtained in an inexpensive and simple manner by mixing the carbon-containing starting material with sulphur, heating the mixture to a temperature of about 120—500°C and subsequently treating it with an aqueous solution of alkali metal hydroxide at a temperature not exceeding about 200°C, whereupon the resulting solid sorbent material is separated and substantially washed free from the alkaline treating solution. It should be noted that the treatment with sulphur of a carbon-containing starting material, viz. a synthetic rubber and/or natural rubber, in order to obtain an active carbon is known in itself from US 3 886 088.

After this treatment and pyrolysis of the product the resulting active carbon can be further activated by roasting. Both from the way in which further activation takes place and from the applications mentioned, such as the treatment of waste water, gases and vapours, it is evident that for this active carbon a mainly physical adsorption is envisaged.

Other processes that include the step of mixing and heating with sulphur in the preparation of an active carbon are for instance described in FR 2 253 815, DE 2 320 886 and US 2 829 115. Apart from the treatment with sulphur all these known processes deviate from the process of this invention in various ways, notably by requiring a final activating step and providing an activated carbon with mainly physical adsorption characteristics.

For the process according to the invention various carbon-containing starting materials may be used. As examples of suitable materials may be mentioned waste materials such as waste rubber, but also peat, lignite, coal, asphalt or petroleum coke. They are preferably used in a finely divided state, in the form of for instance chips or grains having a diameter of not more than a few millimeters. The rubber to be used may be of synthetic or natural origin. It will generally occur in the form of worn tyres of automobiles or other motor vehicles or means of transport, and in the form of worn objects that are partly or entirely made of rubber, such as conveyor belts. The rubber objects may be cut up or ground in any convenient manner, possibly after removal of metal parts, for instance from the beads of automobile tyres. The process according to the invention is usually so carried out that before, during or after the carbon-containing starting material is cut up, it is mixed with 0.1 to 5 parts by weight of sulphur and subsequently heated for a number of hours in an oven at a temperature in range of about 120° to 500°C. Preference, however, is given to a treatment with 0.5 to 1.5 parts by weight of sulphur per part by weight of starting material at a temperature between about 200° and 300°C.

The subsequent treatment of the sulphurized material with an aqueous solution of an alkali metal hydroxide can suitably be carried out at a temperature not exceeding about 200°C; above 100°C the treatment is usually done in an autoclave. It is preferred that use should be made of a sodium hydroxide solution, for instance a 10% NaOH solution, by which with proper stirring the treatment can be completed within a few hours at a temperature of 80°C. or higher.

It has further been found that in the treatment with an aqueous sodium hydroxide solution the formation of thiol groups can still be considerably furthered when in the sodium hydroxide solution there is also dissolved an alkali metal sulphide. Depending on the amount of sulphur previously added to the starting material such a sulphide solution may already be sufficiently formed in situ, so that the sodium hydroxide solution used also may with advantage be employed for treating a fresh batch. In many cases, however, it is advisable, that the sulphide should be dissolved in the aqueous sodium hydroxide solution beforehand, for instance 10% $Na_2S$ in a 10% NaOH solution. The material successively treated with sulphur and an aqueous solution of NaOH is finally filtered and/or washed with (acidified) water, after which it is ready for use.

The physical appearance of the novel adsorbing materials according to the invention may vary from gel form to porous solid matter. For example the material obtained by treating cut up automobile tyres at a temperature between 180° and 280°C. has a gel like

structure. Treatment of the same starting material at a temperature above 400°C. results in obtaining a material having a porous structure.

The material produced with the process according to the invention not only shows the property of a cation exchanger, but is also capable of binding metals that occur in the form of anionic complexes.

Moreover, the material according to the invention appears to have a high reducing capacity, which is particularly manifest in the sorption of ions of noble metals, such as gold and silver, and of metals of the platinum group. It is also found possible for instance to reduce $CrO_4^{2-}$ to $Cr^{3+}$. This means that the novel material according to the invention can also be looked upon as an inexpensive reducing agent. Another useful application of the material according to the invention consists in the removal of mercury from concentrated sulphuric acid, as obtained by roasting zinc sulphide.

A passage through a bed of such material of 96% sulphuric acid containing, say, 5 ppm mercury may cause the mercury content to be reduced to below 0.1 ppm.

The adsorbed mercury remaining on the sorbent after the sulphuric acid has been displaced by dilute acid and finally by water can be isolated from it, if desired, by dry distillation.

It has further been found that the practical applicability of the material prepared by the process according to the invention can still be considerably improved upon.

To that end the invention also provides a process in which prior or subsequent to thermal treatment the starting material is subjected to a treatment with sulphuric acid or oleum, or further heated in the presence of air or some other oxygen-containing gas.

By this additional treatment there are introduced a small number of more or less polar groups such as sulphonic acid groups and/or carboxyl groups, which promote the swelling of the material in water. In practice the treatment with sulphuric acid will as a rule be carried out by bringing 1 part by weight of the material to be treated into contact for some time with 1 to 4 parts by weight of 96% by weight $H_2SO_4$. Upon completion of the reaction the material is centrifuged and washed with water. It is preferred that the treatment with air should take place in a fluid bed. The present invention will be further described in the following examples. These examples are, of course, only meant to illustrate and not to limit the invention.

### Example I

By cutting up old automobile tyres rubber chips measuring 1 to 2 mm were obtained. Of these chips 100 parts by weight were mixed with 120 parts by weight of sublimed sulphur. The resulting mixture was subsequently heated in a rotating steel oven for eight hours at a temperature of 230°C. Next, the temperature was increased to 280°C. over a period of 8 hours. There were obtained 130 parts by weight of hard grains.

Half of the resulting material, while in the fluidized state, was subsequently heated in air at 350°C. over a period of 6 hours and thereafter stirred for 4 hours at 90°C. in an aqueous solution containing 10% NaOH and 10% $Na_2S$. The chips were then filtered off and washed with water. After the material had been acidified with a solution of 5% by weight $H_2SO_4$ and washed with water, a product IA was obtained whose ion exchanging properties are given in Example VI and Example IX. The other half of the material, instead of being heated in air, was heated for 4 hours to 90°C. with stirring in the presence per part by weight of granules of 3 parts by weight of concentrated (96% by weight) sulphuric acid. After the acid had been washed out with water, the same treatment was carried out as described above for the first batch of chips. The ion exchanging properties of this product IB are given in Example VII and Example IX.

### Example II

Brown coal briquettes were crushed and ground into grains measuring 1 to 2 mm.

After drying in an oven at 105°C. 100 parts by weight of the grains made up of brown coal and pitch were mixed with 50 parts by weight of sulphur and introduced into a rotating steel oven whose temperature was raised to 350°C. over a period of 4 hours. There were obtained 90 parts by weight of hard grains which were heated for 2 hours at 90°C in an aqueous solution containing 10% by weight of NaOH.

The grains, which had strongly swollen in the aqueous NaOH solution, were successively washed with water and acidified with dilute sulphuric acid (5% by weight of $H_2SO_4$). After they had again been washed with water, their properties were determined. The results are given in Example VIII and Example IX.

### Example III

100 parts by weight of coal grains (containing 24% volatile material) measuring 1 to 2 mm were mixed with 100 parts by weight of sulphur and subsequently heated for 8 hours in a rotating steel oven, with the temperature being gradually raised from 120°C. to 300°C.

After cooling it was found that the yield of sulphurized coal grains was 115 parts by weight. The grains were then treated in an autoclave for 4 hours at 180°C. with an aqueous solution containing 10% NaOH and 10% $Na_2S$. The resulting material was acidified, washed and sieved to retain a particle size of 0.5 to 1.5 mm. The results are given in Example IX.

### Example IV

100 parts by weight of the same 1—2 mm coal grains as used in Example III were, while in

the fluidized state, heated in air for 16 hours at a temperature of about 300°C.

Subsequently, 100 parts by weight of sublimed sulphur were added and the mixture thus obtained was heated for 4 hours at 300°C. Finally, the resulting grains were further heated for 5 hours at 90°C. with an aqueous solution of 10% by weight NaOH and 10% by weight $Na_2S$. Next, as in Example III, the grains were successively washed with water, excess acid and water.

The results are given in Example IX.

## Example V

100 parts by weight of asphalt were heated, with stirring, with 100 parts by weight of sulphur. At a temperature of 200°C. $H_2S$ escaped. Upon continued heating to 260°C. the viscosity of the mass increased. After 4 hours the mass was left to cool down, followed by crushing it into grains measuring 0.5 to 1.5 mm. Subsequently, 100 parts by weight of the sulphurized material were treated for 16 hours at 100°C. with 200 parts by weight of 96% by weight $H_2SO_4$. After the material had been cooled and the concentrated $H_2SO_4$ been centrifuged off, it was washed with water until acid free and treated with an aqueous $NaOH/Na_2S$ solution in the way indicated in Example IV.

Upon analysis it was found that this material contained strongly acid groups in an amount of as little as 50 meq/l. When 25 ml of grains had been introduced into a 20 cm column, they were found capable of sorbing all silver from a fixing bath containing 1 g Ag per litre.

## Example VI

To illustrate the strong metal adsorbing capacity of the material prepared by the process according to the invention the product prepared in Example I A was tested for its capacity of retaining mercury from a Hg $Cl_4^{2-}$ ions-containing solution.

Through a column of the product prepared in Example I A 20 cm in bed weight and having a bed volume of 25 ml there was passed an aqueous solution containing 100 mg $Hg^{2+}$ and 10 grammes of NaCl per litre.

Over a period of 80 hours 10 litres of 400 bed volumes of this solution were passed through the column. Next, it was found upon analysis by flame spectrometry that the effluent still contained only as little as about 1 ppb (part per billion) of mercury. Comparative experiments in which use was made of brown coal briquettes (particle size 0.5 to 1.5 mm) treated with an aqueous solution of NaOH and of coal grains also treated with such a solution and fluidized in air ("Oxycoal") yielded weakly acid cation exchangers having a reasonable exchange capacity.

These materials, however, were not capable of retaining mercury from a Hg $Cl_4^{2-}$ ions-containing solution.

This capacity is not obtained until the material has been sulphurized.

## Example VII

The product prepared in Example I B. was introduced into a 20 cm column, as used in Example VI. Through the column there was passed a sulphuric acid solution (pH = 1) containing chromium in the form of $CrO_4^{2-}$ and in an amount of 35 mg/l. After the passage of 20 litres or 800 bed volumes the yellow solution was still found to get entirely discoloured.

## Example VIII

25 ml of granular material prepared in the way described in Example II were introduced into a 20 cm column, as used in Example VI.

Through the column there was passed a solution of 1 mg $Cu^{2+}$ per litre in 25% by weight sulphuric acid. After a passage of 40 bed volumes over a period of 8 hours no copper could be found in the effluent of the column.

The solution was subsequently replaced by a 5% sulphuric acid solution containing about 100 mg Ag per litre.

Here too, after a passage of 1 litre over a period of 8 hours, no silver could be detected in the effluent of the column. Finally, the silver solution was replaced by a sulphuric acid gold solution (about 100 mg $Au^{3+}$ per litre). After 1 litre of this solution had been passed through over a period of 8 hours, this metal ion was found to be completely adsorbed. The sorptions were attended with reduction of the metal ions.

## Example IX

The products prepared in the Examples I A, I B, II, III, IV and V were tested for their capacity of sorbing $Hg^{2+}$ from a solution which per litre contained 2 grammes of mercury in the form of $HgCl_4^{2-}$ in an aqueous solution of 30 grammes of NaCl per litre. The percentages dry content mentioned in the table below were determined in the $H^+$ form. The capacities were determined by passing the sublimate solution through a 20 cm column packed with 25 ml of adsorbing material. Loading was not terminated until the mercury leakage was more than 50%.

### Table

| Materials used in the examples | Mercury ads. capacity in g/l | Dry content (%) in $H^+$ form |
|:---:|:---:|:---:|
| IA | 50 | 60 |
| IB | 45 | 64 |
| II | 90 | 56 |
| III | 15 | 85 |
| IV | 65 | 69 |
| V | 40 | 70 |

## Claims

1. A process for the preparation of a solid carbon-containing material having a sorption capacity for metal ions, comprising the step of mixing a carbon-containing starting material with sulphur and subjecting the resulting mixture to heating, characterized in that said mixture is heated to a temperature in the range of about 120° to 500°C and subsequently treated with an aqueous solution of an alkali metal hydroxide at a temperature not exceeding about 200°C, whereupon the resulting solid sorbent material is separated and substantially washed free from the alkaline treating solution.

2. A process according to claim 1, characterized in that in the aqueous solution used there is also dissolved an alkali metal sulphide.

3. A process according to claim 1, characterized in that before or after the thermal treatment the starting material is subjected to a treatment with sulphuric acid or oleum or heated in the presence of air or some other oxygen-containing gas.

## Revendications

1. Procédé pour préparer une matière carbonée solide à pourvoir de sorption pour des ions de métaux, comprenant l'opération de mélange d'une matière première carbonée avec du soufre et le chauffage du mélange obtenu, caractérisé en ce que le mélange est chauffé à une température d'environ 120 à 500°C puis traité à une température d'environ 200°C maximum avec la solution aqueuse d'un hydroxyde de métal alcalin, la matière solide formée à pouvoir de sorption étant ensuite séparée et rendue essentiellement exempte de la solution alcaline au moyen de lavage.

2. Procédé selon la revendication 1, caractérisé en ce que la solution aqueuse utilisée contient aussi un sulfure de métal alcalin à l'état dissous.

3. Procédé selon la revendication 1, caractérisé en ce que, avant ou après le traitement thermique au soufre, la matière de départ est soumise encore à un traitement avec de l'acide sulfurique ou de l'oléum ou est chauffée encore en présence d'air ou d'un autre gaz contenant de l'oxygène.

## Patentansprüche

1. Verfahren zur Herstellung eines festen kohlenstoffhaltigen Materials mit Sorptionsvermögen für Metallionen, wobei ein kohlenstoffhaltiger Rohstoff mit Schwefel gemischt und das erhaltene Gemisch erhitzt wird, dadurch gekennzeichnet, dass das Gemisch auf etwa 120 bis 500°C erhitzt und anschliessend bei einer Temperatur von maximal etwa 200°C mit einer wässerrigen Lösung eines Alkalimetallhydroxids behandelt wird, worauf das gebildete feste Sorptionsmaterial abgetrennt und praktisch frei von der alkalischen Lösung gewaschen wird.

2. Verfahren nach Anspruch 1, dadurch gekennzeichnet, das die eingesetzte wässrige Lösung ebenfalls ein Alkalimetallsulfid in Lösung enthält.

3. Verfahren nach Anspruch 1, dadurch gekennzeichnet, das der Rohstoff vor oder nach der thermischen Behandlung mit Schwefel noch einer Behandlung mit Schwefel oder Oleum unterzogen oder in Gegenwart von Luft oder von einem anderen sauerstoffhaltigen Gas erhitzt wird.